# EUROPEAN PATENT SPECIFICATION

(11) **EP 1 803 588 B1**
(45) Date of publication and mention of the grant of the patent: **15.04.2009**
(21) Application number: 06126314.1
(22) Date of filing: 18.12.2006
(51) Int. Cl.: B60C 19/00

(54) **Tire with strip for correcting dynamic imbalance**
Reifen mit einem Streifen zur Korrektur der dynamischen Unwucht
Pneu avec un insert pour corriger le balourd dynamique

(30) Priority: 28.12.2005 US 754408 P; 11.10.2006 US 546167
(43) Date of publication of application: 04.07.2007
(73) Proprietor: The Goodyear Tire & Rubber Company, Akron, OH 44316-0001 (US)
(72) Inventor: Losey, Robert Allen, Kent, OH 44240 (US); Zhao, Junling, Hudson, OH 44236 (US)
(74) Representative: Kutsch, Bernd

(56) References cited:
- EP-A2- 1 072 447
- WO-A-87/07376
- DE-A1- 2 028 579
- FR-A1- 2 792 048
- JP-A- 11 248 586
- US-A1- 2004 103 967

## Description

### Field of the Invention

The invention relates to a tire and more specifically to a tire with a sacrificial strip for the dynamic balancing of the tire.

### Background of the Invention

It is difficult to produce tires with precision sufficient for the tire to be in dynamic balance. Wheel assemblies are typically balanced by adding balancing weights to the assembly prior to installation upon a vehicle. Another prior art method of correcting tire imbalance is by gluing weights or other objects inside the tire. This method has numerous problems associated with it such as the adhesive not setting up, or not adhering properly due to the bladder release agent on the rubber.

EP-A- 1 072 447 or US-A- 2004/0103967 describe a tire according the preamble of claim 1.

### Summary of the Invention

The invention relates to a tire according to claim 1.

Dependent claims cover preferred embodiments of the invention.

### Brief Description of the Drawings

The invention will be described by way of example and with reference to the accompanying drawings in which:
FIG. 1 is a cross sectional view of the tire of the present invention;
FIG. 2 is a close-up view of the bead area of the tire of figure 1.

### Definitions

"Axial" and "axially" means the lines or directions that are parallel to the axis of rotation of the tire.

Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Radial" and "radially" mean directions radially toward or away from the axis of rotation of the tire.

### Detailed Description of the Invention

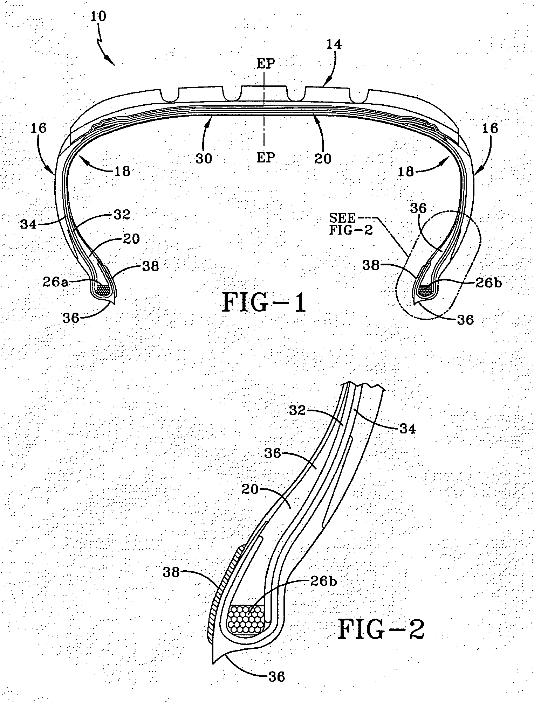

With reference to Fig. 1, there is illustrated a cross-sectional view of an embodiment of a tire 10 of the present invention. The tire 10 has a tread portion 14 and a pair of sidewalls 16 wherein the sidewalls are connected to the tread portion by shoulder regions 18. The tire may have one or more reinforcing belts 20 which laterally extend under the tread 14. A carcass of the tire includes an innerliner 30 which extends from bead 26a to bead 26b. The carcass further comprises a first ply layer 32 and a second ply layer 34. The carcass may comprise additional ply layers if needed. The tire may further comprise an optional apex located in the bead area adjacent the ply turnup.

The tire 10 further includes one or more strips 38 of rubber affixed to the inner edge of the bead area of the tire. The strip is preferably annular. The strip preferably has a width in the range of 0.25 to 1 inch, alternately 0.4 to 0.7 inch. The strip is made of any rubber or elastomeric compound that has a density or specific gravity greater than 2, and more typically in the range of 4 to 8. Thus, the strip is heavier than normal rubber and acts like a weight near the toe 36 of the tire. The strip 38 is preferably affixed to the tire prior to vulcanization and stays adhered to the tire after vulcanization. After the tire is manufactured, the strip may be grinded away in the areas needed to balance the tire. In particular, the strip may be grinded away after vulcanization. Thus there is no need for additional tire weights due to a tire imbalance:

It is readily understood by those having skill in the art that the rubber compositions used in the strip 38 would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. Typical additions of carbon black comprise 20 to 200 parts by weight per 100 parts by weight of diene rubber (phr), preferably 50 to 100.phr.

A number of commercially available carbon blacks may be used. Included in the list of carbon blacks are those known under the ASTM designations N299, S315, N326, N330, M332, N339, N343, N347, N351, N358, N375, N539, N550 and N582. Processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 80 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of zinc oxide comprise 1 to 10 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Instead of, or in addition to carbon black, the composition may contain any heavy material powder such as tungsten, lead, copper, nickel, steel, zinc in an amount sufficient to achieve the desired specific gravity.

A typical amount of such a heavy material powder is in a range of 300 phr to 1500 phr.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In addition, delayed action accelerators may be used which are not affected by normal processing temperatures but produce satisfactory cures at ordinary vulcanization temperatures. Preferably, the primary accelerator is a sulfenamide. If a second accelerator is used, the secondary accelerator is preferably a guanidine, dithiocarbamate or thiuram compound.

### Example 1

One example of a rubber composition suitable for use with the invention is as follows. The rubber composition comprises natural rubber in the amount of 100 parts of natural rubber, microcrystaline wax of 1 phr, wax of 0.5 phr, processing oil of 10 phr, zinc oxide of 5 phr, stearic acid of 2 phr, and tungsten powder of 1100 phr. The composition further comprises sulfer in the amount of 2.5 phr, sulfedamide accelerator of 1.2 phr and bismalium accelerator in the range of 1 phr. The above composition has a specific gravity of 6.5, resulting in a very heavy rubber compound.

The tire can be built, shaped, molded and cured by various methods which will be readily apparent to those having skill in such art. As noted previously herein, strip 38 is covulcanized with the tire in order to be integral with the dynamic tire construction. It is built as a solid unvulcanized layer onto the inner portion of the green, unvulcanized tire and then shaped, molded and heated under pressure to simultaneously covulcanize therewith.

In a variation of the above described embodiment, the strip or balance patch may be applied to a post cure tire (as opposed to a green tire) near the bead area as described above. The strips or balance patches are made as described above, except that they are cured and then applied to a post cure tire. The strip or balance patch may be glued to the inside of the tire. As described above, the strip or balance patch may be ground away in order to balance the tire. The strip or balance patch may be adhered to the tire using velcro or interlocking (hook and loop) fastener means. The strip or balance patch may have a first fastener means cured or glued thereto. The tire may have a second interlocking strip cured or glued thereto for fastening with the strip or balance patch.

Alternatively, a velcro strip may be cured, glued or otherwise affixed to the inside of the tire. Weights with the velcro strips affixed can be added where it is needed and the location can be easily changed if needed.

## Claims

1. A tire comprising a tread portion (14) and a pair of sidewalls (16) wherein the sidewalls are connected to the tread portion by shoulder regions (18), at least one reinforcing belt (20), which laterally extends under the tread (14), and a carcass which includes one or more layers of ply (32, 34), which extend from a first bead (26a) to a second bead (26b), wherein the tire (10) includes at least one strip (38) comprising rubber affixed to the inner surface of the tire, **characterized in that** the strip has specific gravity of greater than 2.

2. The tire of claim 1, wherein the strip (38) is annular.

3. The tire of claim 1 or 2, wherein the strip (38) is located near the toe (36) of the bead (26).

4. The tire of at least one of the previous claims, wherein the strip has a width of 0.635 cm to 2.54 cm.

5. The tire of at least one of the previous claims, wherein the strip has a specific gravity of greater than 4.

6. The tire of at least one of the previous claims, wherein the strip comprises a heavy material powder, particularly a tungsten, lead, copper, nickel, iron, steel, zinc or tin powder.

7. The tire of claim 1 wherein the strip (38) has a specific gravity in the range of 4 to 8.

8. A method of correcting a dynamic imbalance of a tire, the method comprising:
making a green tire;
applying at least one strip (38) having a specific gravity greater than 2 to the green tire;
and vulcanizing the tire (10) in a mold.

9. The method of claim 8 or 9, wherein the strip (38) is applied at or close to the inner edge of the bead area of the tire.

10. A method of correcting a dynamic imbalance of a tire, the method comprising:
making a cured tire;
applying at least one cured strip (38) having a specific gravity of greater than 2 to the cured tire.

11. The method of claim 8 or 10, wherein the tire is dynamically tested for imbalance and then the strip is ground away in one or more areas needed to balance the tire.

12. The method of claim 10 or 11, wherein the strip is glued to the inside of the tire or adhered to the inside of the tire using velcro or interlocking means.

13. The method of claim 8 or 10, wherein the strip has a specific gravity grater than 4.

## Patentansprüche

1. Reifen, umfassend einen Laufflächenteil (14) und ein Paar Seitenwände (16), wobei die Seitenwände durch Schulterbereiche (18) mit dem Laufflächenteil verbunden sind, mindestens einen Verstärkungsgürtel (20), der lateral unter der Lauffläche (14) verläuft, und eine Karkasse, die ein oder mehrere Karkassenlagenschichten (32, 34) beinhaltet, die sich von einem ersten Wulst (26a) zu einem zweiten Wulst (26b) erstrecken, wobei der Reifen (10) mindestens einen Gummi enthaltenden Streifen (38) beinhaltet, der an der Innenfläche des Reifens befestigt ist, **dadurch gekennzeichnet, dass** der Streifen ein spezifisches Gewicht von höher als 2 hat.

2. Reifen nach Anspruch 1, wobei der Streifen (38) ringförmig ist.

3. Reifen nach Anspruch 1 oder 2, wobei der Streifen (38) sich nächst der Zehe (36) des Wulsts (26) befindet.

4. Reifen nach mindestens einem der vorgenannten Ansprüche, wobei der Streifen eine Breite von 0,635 cm bis 2,54 cm aufweist.

5. Reifen nach mindestens einem der vorgenannten Ansprüche, wobei der Streifen ein spezifisches Gewicht von höher als 4 aufweist.

6. Reifen nach mindestens einem der vorgenannten Ansprüche, wobei der Streifen ein Schwermetallpulver, insbesondere ein Wolfram-, Blei-, Kupfer-, Nickel-, Eisen-, Stahl-, Zink- oder Zinnpulver, umfasst.

7. Reifen nach Anspruch 1, wobei der Streifen (38) ein spezifisches Gewicht im Bereich von 4 bis 8 aufweist.

8. Verfahren zur Korrektur einer dynamischen Unwucht eines Reifens, wobei das Verfahren umfasst:
Herstellen eines Reifenrohlings;
Anbringen mindestens eines Streifens (38) mit einem spezifischen Gewicht von höher als 2 an dem Reifenrohling;
und Vulkanisieren des Reifens (10) in einem Formwerkzeug.

9. Verfahren nach Anspruch 8 oder 9, wobei der Streifen (38) an oder dicht an der Innenkante des Wulstbereichs des Reifens angebracht wird.

10. Verfahren zur Korrektur einer dynamischen Unwucht eines Reifens, wobei das Verfahren umfasst:
Herstellen eines vulkanisierten Reifens;
Anbringen mindestens eines vulkanisierten Streifens (38) mit einem spezifischen Gewicht von höher als 2 an dem vulkanisierten Reifen.

11. Verfahren nach Anspruch 8 oder 10, wobei der Reifen dynamisch auf Unwucht geprüft wird und dann der Streifen in einem oder mehreren Bereichen, die zum Auswuchten des Reifens benötigt werden, weggeschliffen wird.

12. Verfahren nach Anspruch 10 oder 11, wobei der Streifen an die Innenseite des Reifens geklebt oder unter Verwendung von Klettenband oder Verriegelungsmitteln an der Innenseite des Reifens befestigt wird.

13. Verfahren nach Anspruch 8 oder 10, wobei der Streifen ein spezifisches Gewicht von höher als 4 aufweist.

## Revendications

1. Bandage pneumatique comprenant une portion de bande de roulement (14) et une paire de flancs (16), les flancs étant reliés à la portion de bande de roulement par des régions d'épaulements (18), au moins une ceinture de renforcement (20) qui s'étend latéralement en dessous de la bande de roulement (14), et une carcasse qui englobe une ou plusieurs couches de nappes (32, 34) qui s'étendent d'un premier talon (26a) à un deuxième talon (26b), le bandage pneumatique (10) englobant au moins une bande (38) comprenant du caoutchouc fixé à la surface interne du bandage pneumatique, **caractérisé en ce que** la bande possède un poids spécifique supérieur à 2.

2. Bandage pneumatique selon la revendication 1, dans lequel la bande (38) est une bande annulaire.

3. Bandage pneumatique selon la revendication 1 ou 2, dans lequel la bande (38) est disposée à proximité du bout (36) du talon (26).

4. Bandage pneumatique selon au moins une des revendications précédentes, dans lequel la bande possède une largeur de 0,635 cm à 2,54 cm.

5. Bandage pneumatique selon au moins une des revendications précédentes, dans lequel la bande possède un poids spécifique supérieur à 4.

6. Bandage pneumatique selon au moins une des revendications précédentes, dans lequel la bande comprend une matière lourde pulvérulente, en particulier une poudre de tungstène, de plomb, de cuivre, de nickel, de fer, d'acier, de zinc ou d'étain.

7. Bandage pneumatique selon la revendication 1, dans lequel la bande (38) possède un poids spécifique dans la plage de 4 à 8.

8. Procédé pour corriger le déséquilibre dynamique d'un bandage pneumatique, le procédé comprenant le fait de :
confectionner un bandage pneumatique cru ;
appliquer au moins une bande (38) possédant un poids spécifique supérieur à 2 sur le bandage pneumatique cru ; et
vulcaniser le bandage pneumatique (10) dans un moule.

9. Procédé selon la revendication 8 ou 9, dans lequel la bande (38) est appliquée sur le bord interne de la zone de talon du bandage pneumatique ou à un endroit proche du bord en question.

10. Procédé pour corriger le déséquilibre dynamique d'un bandage pneumatique, le procédé comprenant le fait de :
confectionner un bandage pneumatique vulcanisé ;
appliquer au moins une bande (38) possédant un poids spécifique supérieur à 2 sur le bandage pneumatique vulcanisé.

11. Procédé selon la revendication 8 ou 10, dans lequel le bandage pneumatique est soumis à un essai dynamique afin de détecter le déséquilibre, la bande étant ensuite éliminée par meulage dans une ou plusieurs zones requises pour équilibrer le bandage pneumatique.

12. Procédé selon la revendication 10 ou 11, dans lequel la bande est collée à l'intérieur du bandage pneumatique ou bien on fait adhérer ladite bande à l'intérieur du bandage pneumatique en utilisant une bande velcro ou un moyen de verrouillage.

13. Procédé selon la revendication 8 ou 10, dans lequel la bande possède un poids spécifique supérieur à 4.
